(19) Europäisches Patentamt
European Patent Office
Office européen des brevets

(11) **EP 4 458 891 A1**

(12) **EUROPEAN PATENT APPLICATION**
published in accordance with Art. 153(4) EPC

(43) Date of publication:
**06.11.2024 Bulletin 2024/45**

(21) Application number: **22915648.4**

(22) Date of filing: **05.12.2022**

(51) International Patent Classification (IPC):
*C08J 9/00* (2006.01)  *C08J 9/28* (2006.01)
*B29C 67/20* (2006.01)

(52) Cooperative Patent Classification (CPC):
**B29C 67/20; C08J 9/00; C08J 9/28**

(86) International application number:
**PCT/JP2022/044790**

(87) International publication number:
**WO 2023/127417 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021 JP 2021214035**

(71) Applicant: **Zeon Corporation
Tokyo 100-8246 (JP)**

(72) Inventor: **MIYAZAWA Shinsuke
Tokyo 100-8246 (JP)**

(74) Representative: **Maiwald GmbH
Elisenhof
Elisenstraße 3
80335 München (DE)**

(54) **POROUS BODY, AND METHOD FOR PREPARING POROUS BODY**

(57) Provided is a porous body which is capable of achieving both a high collection rate and a low pressure loss, and exhibiting sufficient durability strength over a long period of time. The porous body is composed of a material having a zeta potential of -160 mV to -60 mV at pH 9, has a pore diameter of 1-1000 nm as measured by a bubble point method, and a tensile strength of at least 30 N/25 mm.

EP 4 458 891 A1

**Description**

TECHNICAL FIELD

The present disclosure relates to a porous body and a method for producing a porous body.

BACKGROUND

In recent years, porous bodies such as filters for collecting fine particles have been proposed in the fields of semiconductor production, medicine, and the like.

For example, Patent Literature (PTL) 1 proposes a filter including a nonwoven fabric which is formed from a fiber containing a crystalline alicyclic structure-containing resin, and has a pore diameter of 5 $\mu$m or less as measured by a bubble point method. According to PTL 1, a filter including such a nonwoven fabric is capable of achieving a high collection rate, low pressure loss, and long-term use.

CITATION LIST

Patent Literature

PTL 1: WO2019/167683A

SUMMARY

(Technical Problem)

However, the aforementioned conventional porous body may be insufficient in collection rate, for example, when adapted to collect metal ions in a chemical liquid. On the other hand, if the pore diameter of the porous body is reduced with an aim to increase the collection rate, the porous body then suffers clogging, which leads to a high pressure loss. Therefore, the conventional porous body described above has room for further improvement in terms of achieving both high collection rate and low pressure loss at a high level. Further, the conventional porous body described above has been required to exhibit sufficient durability strength for a long period of time.

It could therefore be helpful to provide a porous body that is capable of achieving both high collection rate and low pressure loss at a high level and also capable of exhibiting sufficient durability strength over a long period of time, and a method for producing the porous body.

(Solution to Problem)

The present disclosure aims to advantageously solve the aforementioned problem, and [1] the presently disclosed porous body is made of a material having a zeta potential of -160 mV or more and -60 mV or less at pH 9, and has a pore diameter of 1 nm or more and 1000 nm or less as measured by a bubble point method and a tensile strength of at least 30 N/25 mm. A porous body made of a material having a zeta potential of -160 mV or more and -60 mV or less at pH 9, a pore diameter of 1 nm or more and 1000 nm or less as measured by a bubble point method, and a tensile strength of 30 N/25 mm or more as described above is capable of achieving both high collection rate and low pressure loss at a high level, and exhibiting sufficient durability strength over a long period of time.

In the present specification, the "zeta potential at pH 9", the "pore diameter as measured by a bubble point method", and the "tensile strength" can be measured according to the methods described in Examples disclosed herein.

Here, [2] in the porous body of [1] above, the porous body preferably has a pressure loss of 0 kPa or more and 10 kPa or less after a ceria aqueous dispersion passed through the porous body for 10 minutes at a flow rate of 1 L/minute, the ceria aqueous dispersion containing ceria with an average secondary particle diameter of 20 nm dispersed at a concentration of 3 mass%. When a porous body has a pressure loss of 0 kPa or more and 10 kPa or less after a predetermined ceria aqueous dispersion was passed through the porous body under a predetermined condition as described above, the porous body can be improved in durability strength.

In the present specification, the "pressure loss" can be measured according to the method described in Examples disclosed herein.

Further, [3] in the porous body of [1] or [2], the material is preferably a crystalline alicyclic structure-containing resin. When a crystalline alicyclic structure containing-resin is used as described above, the pressure loss of the porous body can be further suppressed.

Further, the present disclosure is intended to advantageously solve the problems as set forth above, and [4] a method for producing the presently disclosed porous body made of a material having a zeta potential of -160 mV or more and -60 mV or less at pH 9, the porous body having a pore diameter of 1 nm or more and 1000 nm or less as measured by a bubble point method and a tensile strength of at least 30 N/25 mm, the method including stretching an unstretched film at least containing a crystalline alicyclic structure-containing resin to form the porous body. The aforementioned method for producing a porous body makes it possible to efficiently produce a porous body capable of achieving both high collection rate and low pressure loss at a high level, and exhibiting sufficient durability strength over a long period of time.

Then, [5] in the production method of [4], the stretching is preferably performed at a stretching ratio of 1.2 times or more and 100 times or less. When the stretching is performed at a stretching ratio of 1.2 times or more and 100 times or less, the presently disclosed porous body disclosure can be more efficiently produced.

(Advantageous Effect)

According to the present disclosure, it is possible to provide a porous body capable of achieving both high collection rate and low pressure loss at a high level and capable of exhibiting sufficient durability strength over a long period of time, and a method for efficiently producing the porous body.

DETAILED DESCRIPTION

The following provides a detailed description of embodiments of the present disclosure. Here, the presently disclosed porous body is preferably used, for example, as a filter that efficiently collects fine particles in the fields of semiconductor production, medicine, or the like. The presently disclosed porous body can be efficiently produced by the presently disclosed method for producing a porous body.

(Porous body)

The presently disclosed porous body is made of a material having a zeta potential of -160 mV or more and -60 mV or less at pH 9. The presently disclosed porous body has a pore diameter of 1 nm or more and 1000 nm or less as measured by a bubble point method and a tensile strength of at least 30 N/25mm.

<Material>

The material constituting the presently disclosed porous body has a zeta potential at pH 9 that is preferably -120 mV or more, and more preferably -100 mV or more, and is preferably -62 mV or less, and more preferably -65 mV or less. When the material constituting the porous body has a zeta potential that falls within the aforementioned ranges at pH 9, the porous body can be adsorbed with metal ions, and thus can be further increased in collection rate.

Here, materials having a zeta potential at pH 9 that falls within the aforementioned ranges are not particularly limited, and examples thereof include polyethylene, polypropylene, polyimide, nylon 6, nylon 66, nylon 9T, polyphenylene sulfide, polyphenylene oxide, polyethylene terephthalate, polybutylene terephthalate, polyetherimide, polyacetal, polytetrafluoroethylene, polychlorotrifluoroethylene, tetrafluoroethylene-perfluoroalkoxyethylene copolymer, tetrafluoroethylene hexafluoropropylene copolymer, ethylene tetrafluoroethylene copolymer, ethylenechlorotrifluoroethylene copolymer, polyvinylidene fluoride, polyvinyl fluoride, polyvinylidene chloride, polyamideimide, polyvinyl alcohol, polylactic acid, phenolic resin, aramid resin, urea resin, melamine resin, urethane resin, epoxy resin, cellulose, polystyrene, polyethylene naphthalate, polymethylpentene, syndiotactic polystyrene, polysulfone, polyethersulfone, and alicyclic structure-containing resin.

- Alicyclic structure-containing resin -

As used herein, the term "alicyclic structure-containing resin" refers to a polymer obtained by polymerizing an alicyclic structure-containing monomer and/or a hydride thereof. In the present specification, a polymer obtained by polymerizing an alicyclic structure-containing monomer and/or a hydride thereof is referred to as "crystalline alicyclic structure-containing resin" when the polymer and/or the hydride thereof have crystallinity, while referred to as "amorphous alicyclic structure-containing resin" when the polymer and/or the hydride thereof have no crystallinity. Here, when a polymer and/or a hydride thereof "have crystallinity", it means that the polymer and/or the hydride thereof have a melting point to be detected by differential scanning calorimetry (DSC) according to JIS K7121. The "crystallinity" of a polymer and/or a hydride thereof is a property inherent in the polymer having a specific structure and/or the hydride thereof, which may be resulting from the polymer chain having stereoregularity. From a viewpoint of further suppressing the pressure loss of the presently disclosed porous body, a crystalline alicyclic structure-containing resin may preferably be used as the alicyclic structure-containing resin. The crystalline alicyclic structure-containing resin is preferably not crosslinked.

Here, the alicyclic structure-containing resin, which is a polymer obtained by polymerizing an alicyclic structure-containing monomer and/or a hydride thereof, may be a polymer obtained by polymerizing only an alicyclic structure-containing monomer, or may be a copolymer obtained by copolymerizing an alicyclic structure-containing monomer and other monomers other than the alicyclic structure-containing monomer.

Further, as the alicyclic structure-containing resin, for example, a polymer obtained by addition polymerization of an alicyclic structure-containing monomer (alicyclic structure-containing addition polymer) may be used. However, it is more preferred to use a polymer obtained by ring-opening polymerization of an alicyclic structure-containing polymer (alicyclic structure-containing ring-opened polymer) and a hydride thereof, and it is further preferred to use an alicyclic structure-containing ring-opened polymer hydrogenated product, because of its excellent mechanical strength.

Specific examples of the aforementioned alicyclic structure-containing monomer include, but are not limited to: 1-ring (monocyclic) alicyclic structure-containing monomers such as cyclopentene, cyclohexene, cycloheptene, cyclooctene, cyclopentadiene, 1,3-cyclohexadiene, and derivatives thereof having a substituent on the ring;

2-ring alicyclic structure-containing monomers such as bicyclo[2.2.1]hept-2-ene (trivial name: 2-norbornene), 5-methyl-bicyclo[2.2.1]hept-2-ene, 5,5-dimethyl-bicyclo[2.2.1]hept-2-ene, 5-ethyl-bicyclo[2.2.1]hept-2-ene, 5-butyl-bicyclo[2.2.1]hept-2-ene, 5-ethylidene-bicyclo[2.2.1]hept-2-ene, 5-hexyl-bicyclo[2.2.1]hept-2-ene, 5-octyl-bicyclo[2.2.1]hept-2-ene, 5-octadecyl-bicyclo[2.2.1]hept-2-ene, 5-methyliden-bicyclo[2.2.1]hept-2-ene, 5-vinyl-bicyclo[2.2.1]hept-2-ene, 5-propenyl-bicyclo[2.2.1]hept-2-ene, and derivatives thereof having a substituent on the ring;
3-ring alicyclic structure-containing monomers such as tricyclo[5.2.1.0$^{2,6}$]deca-3,8-diene (trivial name: dicyclopentadiene), tricyclo[5.2.1.0$^{2,6}$]deca-3-ene (trivial name: 5,6-dihydrocyclopentadiene), tricyclo[6.2.1.0$^{2,7}$]undec-3,9-diene, tricyclo[6.2.1.0$^{2,7}$]undec-4,9-diene, tricyclo[6.2.1.0$^{2,7}$]undec-9-ene, 5-cyclopentyl-bicyclo[2.2.1]hept-2-ene, 5-cyclohexyl-bicyclo[2.2.1]hept-2-ene, 5-cyclohexenylbicyclo[2.2.1]hept-2-ene, 5-phenyl-bicyclo[2.2.1]hept-2-ene, and derivatives thereof having a substituent on the ring;
4-ring alicyclic structure-containing monomers such as tetracyclo[6.2.1.1$^{3,6}$.0$^{2,7}$]dodeca-4-ene (also simply referred to as "tetracyclododecene"), 9-methyltetracyclo[6.2.1.1$^{1,6}$.0$^{2,7}$]dodeca-4-ene, 9-ethyltetracyclo[6.2.1.1$^{3,6}$.0$^{2,7}$]dodeca-4-ene, 9-methylidenetetracyclo[6.2.1.1$^{3,6}$.0$^{2,7}$]dodeca-4-ene, 9-ethylidenetetracyclo[6.2.1.1$^{3,6}$.0$^{2,7}$]dodeca-4-ene, 9-vinyltetracyclo[6.2.1.1$^{3,6}$.0$^{2,7}$]dodeca-4-ene, 9-propenyl-tetracyclo[6.2.1.1$^{3,6}$.0$^{2,7}$]dodeca-4-ene, tetracyclo[9.2.1.0$^{2,10}$.0$^{3,8}$]tetradeca-3,5,7,12-tetraene (also referred to as 1,4-methano-1,4,4a,9a-tetrahydrofluorene), tetracyclo[10.2.1.0$^{2,11}$.0$^{4,9}$]pentadeca-4,6,8,13-tetraene (also referred to as 1,4-methanoic-1,4,4a,9,9a,10-hexahydroanthracene), and derivatives thereof having a substituent on the ring;
5-ring alicyclic structure-containing monomers such as 9-cyclopentyl-tetracyclo[6.2.1.1$^{3,6}$.0$^{2,7}$]dodec-4-ene, 9-cyclohexyl-tetracyclo[6.2.1.1$^{3,6}$.0$^{2,7}$]dodec-4-ene, 9-cyclohexenyl-tetracyclo[6.2.1.1$^{3,6}$.0$^{2,7}$]dodec-4-ene, pentacyclo[6.6.1.1$^{3,6}$.0$^{2,7}$.0$^{9,14}$]-4-hexadecene, pentacyclo[6.5.1.1$^{3,6}$.0$^{2,7}$.0$^{9,13}$]-4-pentadecene, pentacyclo[7.4.0.0$^{2,7}$.0$^{3,6}$.1$^{10,13}$]-4-pentadecene, 9-phenyl-cyclopentyl-tetracyclo[6.2.1.1$^{3,6}$.0$^{2,7}$]dodeca-4-ene, heptacyclo[8.7.0.1$^{2,9}$.1$^{4,7}$.1$^{11,17}$.0$^{3,8}$.0$^{12,16}$]-5-eicosene, heptacyclo[8.7.0.1$^{2,9}$.0$^{3,8}$.1$^{4,7}$.0$^{12,17}$.1$^{13,16}$]-14-eicosene, and derivatives thereof having a substituent on the rings.

Examples of the substituent on the ring of the aforementioned derivatives are not particularly limited, and include an alkyl group, an alkylene group, a vinyl group, an alkoxycarbonyl group, and an alkylidene group.

Here, the aforementioned dicyclopentadienes such as dicyclopentadiene and 5,6-dihydrocyclopentadiene have endo- and exo-stereoisomers, and the endo- and exo-isomers can both be used in the present disclosure. In particular, from a viewpoint of improving the heat resistance and chemical resistance of the porous body to be obtained, it is preferable that the proportion of either the endo- or exo-isomer is the main component of the dicyclopentadienes. In other words, the proportion of either the endo- or exo-isomer is preferably 50 mass% or more when the content of the dicyclopentadiene contained in the alicyclic structure-containing resin is 100 mass%.

Further, other monomers than the alicyclic structure-containing monomer are not particularly limited as long as they can be copolymerized with the alicyclic structure-containing monomer, but examples of other monomers capable of addition copolymerization with the alicyclic structure-containing monomer include α-olefins having 2 to 20 carbon atoms such as ethylene, propylene, 1-butene, 1-pentene, and 1-hexene, and derivatives thereof; and non-conjugated dienes such as 1,4-hexadiene, 4-methyl-1,4-hexadiene, 5-methyl-1,4-hexadiene, and 1,7-octadiene.

Here, when the alicyclic structure-containing monomer and other monomers other than the alicyclic structure-containing monomer are polymerized to obtain an alicyclic structure-containing polymer, the mass ratio of the amount of the other monomers used with respect to the amount of the alicyclic structure-containing monomer (other monomers/alicyclic structure-containing monomer) is not particularly limited, yet it is preferably 30/70 or less, more preferably 20/80 or less, even more preferably 10/90 or less, and particularly preferably 0/100.

The aforementioned alicyclic structure-containing ring-opened polymer can be produced, for example, by a method using a metathesis reaction catalyst (ring-opening polymerization catalyst) such as a ruthenium carbene complex catalyst as described in WO2010/110323A, or a method using a ring-opening polymerization catalyst of a metal compound such as a tungsten (phenylimide) tetrachlorolide tetrahydrofuran complex as described in JP2015-54885A.

The ring-opening polymerization catalyst may be a combination of a metal compound and an organometallic reducing agent. The use of a metal compound and an organometallic reducing agent in combination improves the polymerization activity.

Examples of the organometallic reducing agent include organometallic compounds of Groups 1, 2, 12, 13, and 14 of the Periodic Table having a hydrocarbon group with 1 to 20 carbon atoms.

Examples of the organometallic compound include: organolithium such as methyllithium, n-butyllithium, and phenyllithium; organomagnesium such as butylethylmagnesium, butyloctylmagnesium, dihexylmagnesium, ethylmagnesium chloride, n-butylmagnesium chloride, and allylmagnesium bromide; organozinc such as dimethylzinc, diethylzinc, and diphenylzinc; organoaluminum such as trimethylaluminum, triethylaluminum, triisobutylaluminum, diethylaluminum chloride, ethylaluminum sesquichloride, ethylaluminum dichloride, diethylaluminum ethoxide, diisobutylaluminum isobutoxide, ethylaluminum diisobutoxide, and isobutyl aluminum diisobutoxide; and organotin such as tetramethyltin, tetra(n-butyl)tin, and tetraphenyltin.

The ring-opening polymerization reaction is usually carried out in an organic solvent. The organic solvent used is not particularly limited as long as it is capable of dissolving or dispersing a ring-opening polymer or a hydride thereof under a predetermined condition and does not inhibit a ring-opening polymerization reaction or a hydrogenation reaction.

Examples of the organic solvent include aliphatic hydrocarbons such as pentane, hexane, and heptane; alicyclic hydrocarbons such as cyclopentane, cyclohexane, methylcyclohexane, dimethylcyclohexane, trimethylcyclohexane, ethylcyclohexane, diethylcyclohexane, decahydronaphthalene, bicycloheptane, tricyclodecane, hexahydroindene, and cyclooctane; aromatic hydrocarbons such as benzene, toluene, and xylene; halogen-based aliphatic hydrocarbons such as dichloromethane, chloroform, and 1,2-dichloroethane; halogen-based aromatic hydrocarbons such as chlorobenzene and dichlorobenzene; nitrogen-containing hydrocarbons such as nitromethane, nitrobenzene, and acetonitrile; ethers such as diethyl ether and tetrahydrofuran; mixed solvents of these; and the like.

Of these, aromatic hydrocarbons, aliphatic hydrocarbons, alicyclic hydrocarbons, and ethers are preferred as the organic solvent.

Further, a method of hydrogenating an alicyclic structure-containing ring-opened polymer to produce an alicyclic structure-containing ring-opened polymer hydrogenated product is not particularly limited, and can be carried out, for example, by supplying hydrogen into a reaction system in the presence of a hydrogenation catalyst. As the hydrogenation catalyst, a homogeneous catalyst or a heterogeneous catalyst can be used.

Examples of the homogeneous catalyst include: a catalyst including a combination of a transition metal compound and an organoaluminum compound, such as cobalt acetate/triethyl aluminum and nickel acetylacetonate/triisobutylaluminum; a catalyst including a combination of a transition metal compound and an organo-alkali metal compound, such as titanocene dichloride/n-butyl lithium and zirconocene dichloride/sec-butyl lithium; a catalyst including a combination of a transition metal compound and an organomagnesium compound, such as tetrabutoxytitanate/dimethylmagnesium; a precious metal complex catalyst, such as dichlorobis (triphenylphosphine) palladium, chlorohydridocarbonyltris (triphenylphosphine) ruthenium, chlorohydridocarbonylbis(tricyclohexylphosphine)ruthenium, bis(tricyclohexylphosphine)benzylidine ruthenium (IV) dichloride, and chlorotris(triphenylphosphine)rhodium; and the like.

Examples of the heterogeneous catalyst include: a metal catalyst such as nickel, palladium, platinum, rhodium, and ruthenium; and a solid catalyst such as nickel/silica, nickel/diatomaceous earth, nickel/alumina, palladium/carbon, palladium/silica, palladium/diatomaceous earth, and palladium/alumina, in which the metal are supported on a carrier such as carbon, silica, diatomaceous earth, alumina, or titanium oxide.

The hydrogenation reaction is usually performed in an inert organic solvent. Examples of the inert organic solvent include: aromatic hydrocarbons such as benzene and toluene; aliphatic hydrocarbons such as pentane and hexane; alicyclic hydrocarbons such as cyclohexane and decahydronaphthalene; and ethers such as tetrahydrofuran and ethylene glycol dimethyl ether.

The inert organic solvent may be the same as or different from any of those used in the ring-opening polymerization reaction. Alternatively, the hydrogenation reaction may be carried out by adding the hydrogenation catalyst directly to the ring-opening polymerization reaction liquid.

The reaction conditions of the hydrogenation reaction vary depending on the hydrogenation catalyst used, but the reaction temperature is preferably -20°C or higher, more preferably -10°C or higher, and even more preferably 0°C or higher, and is preferably 250°C or lower, more preferably 220°C or lower, and even more preferably 200°C or lower. The reaction temperature being equal to or higher than the aforementioned lower limits allows the hydrogenation reaction to effectively proceed. Further, the reaction temperature being equal to or lower than the aforementioned upper limits can suppress side reactions.

The hydrogen pressure is preferably 0.01 MPa or higher, more preferably 0.05 MPa or higher, and even more preferably 0.1 MPa or higher, and is preferably 20 MPa or lower, more preferably 15 MPa or lower, and even more preferably 10 MPa or lower. The hydrogen pressure being within the aforementioned ranges allows the hydrogenation reaction to more effectively proceed.

The reaction time is not particularly limited as long as a desired percent hydrogenation is achieved, yet it is usually 0.1 hour or more and 10 hours or less.

The percent hydrogenation in the hydrogenation reaction (i.e., the proportion of hydrogenated unsaturated bonds) is not particularly limited, yet it is preferably 98% or more and more preferably 99% or more. When the percent hydrogenation is higher, the alicyclic structure-containing ring-opened polymer hydrogenated product is more excellent in heat resistance. The percent hydrogenation can be measured by $^1$H-NMR.

The glass transition temperature of the alicyclic structure-containing resin is not particularly limited, and varies depending on the type of polymer, yet it is preferably -10°C or higher, more preferably 30°C or higher, and even more preferably 50°C or higher, and is preferably 300°C or lower, more preferably 250°C or lower, and even more preferably 200°C or lower.

The melting point of the alicyclic structure-containing resin is not particularly limited, yet it is preferably 50°C or higher, more preferably 100°C or higher, and even more preferably 130°C or higher, and is preferably 400°C or lower, more preferably 350°C or lower, and even more preferably 300°C or lower. When the melting point of the alicyclic structure-containing resin is equal to or higher than the aforementioned lower limits, the alicyclic structure-containing resin will be excellent in heat deformation resistance in actual use. When the melting point of the alicyclic structure-containing resin is equal to or lower than the aforementioned upper limits, the alicyclic structure-containing resin will have sufficient fluidity at the time of melting and be excellent in formability.

The glass transition temperature and melting point of the alicyclic structure-containing resin can be measured by the method described in Examples disclosed herein.

Further, when the alicyclic structure-containing resin is an amorphous alicyclic structure-containing resin, the alicyclic structure-containing polymer constituting the amorphous alicyclic structure-containing resin may be a ring-opened polymer or an addition polymer.

When the crystalline alicyclic structure-containing resin is an alicyclic structure-containing ring-opened polymer hydrogenated product, the alicyclic structure-containing ring-opened polymer hydrogenated product preferably has stereoregularity of syndiotactic. When the alicyclic structure-containing ring-opened polymer hydrogenated product is syndiotactic, the porous body to be obtained can be improved in physical properties such as heat resistance, mechanical strength, and solvent resistance.

Here, the proportion of syndiotactic is not particularly limited, yet it is preferred that the proportion of syndiotactic is higher from a viewpoint of enhancing the crystallinity of the alicyclic structure-containing ring-opened polymer hydrogenated product so as to achieve particularly excellent heat resistance. More specifically, the proportion of racemo diads to the repeating unit obtained by ring-opening polymerization of the alicyclic structure-containing monomer and then hydrogenating the resultant is preferably 51% or more, more preferably 60% or more, and particularly preferably 70% or more. When the proportion of racemo diads is higher, i.e., when the syndiotactic ratio is higher, the alicyclic structure-containing ring-opened polymer hydrogenated product to be obtained will have a higher melting point.

The proportion of racemo diads can be measured and quantified by $^{13}$C-NMR spectral analysis, and specifically, can be quantified by the methods described in Examples disclosed herein.

The weight-average molecular weight (Mw) of the alicyclic structure-containing resin is not particularly limited, yet it is preferably 1,000 or more, more preferably 2,000 or more, and is preferably 1,000,000 or less, more preferably 500,000 or less. When the weight average molecular weight of the alicyclic structure-containing resin is within the aforementioned ranges, the mechanical strength and moldability of the porous body are highly balanced, which is preferable.

The molecular weight distribution (Mw/Mn) of the alicyclic structure-containing resin is not particularly limited, yet it is usually 1.0 or more, preferably 1.5 or more, and is usually 4.0 or less, and preferably 3.5 or less.

In the present disclosure, the weight-average molecular weight (Mw) and the molecular weight distribution (Mw/Mn) can be determined by the methods described in Examples disclosed herein.

In the present disclosure, the alicyclic structure-containing resin may be used in one kind alone or in a combination of two or more kinds.

<Pore diameter as measured by bubble point method>

The presently disclosed porous body has a pore diameter that is 1 nm or more, preferably 50 nm or more, more preferably 100 nm or more, and even more preferably 500 nm or more, and is 1000 nm or less, preferably 950 nm or less, and more preferably 900 nm or less, as measured by the bubble point method. When the pore diameter of the porous body is equal to or larger than the aforementioned lower limits, the pressure loss of the porous body can be suppressed sufficiently low. In addition, when the pore diameter of the porous body is equal to or smaller than the aforementioned upper limits, the collection rate of the porous body can be increased sufficiently high.

Here, the "pore diameter as measured by the bubble point method" means the maximum pore diameter $D_{BP}$ ($\mu$m) calculated by using Equation (1) below, based on the pressure at the time of bubble generation (hereinafter, referred to as "bubble point pressure") when the porous body is immersed in a measuring liquid (for example, isopropyl alcohol) and the gas pressure is increased and bubbles are first generated from a pore having the maximum pore diameter.

The maximum pore diameter

$$D_{BP} = (4\gamma\cos\theta/P)\times10^{-6} \cdots (1)$$

In Equation (1), y represents the surface tension (N/m) of the measuring liquid, $\theta$ represents the contact angle (rad) between the measuring liquid and the porous body, and P represents the bubble point pressure (Pa).

<Tensile strength>

The tensile strength of the presently disclosed porous body is 30 N/25mm or more, preferably 32 N/25mm or more, more preferably 35 N/25mm or more, and even more preferably 40 N/25mm or more. When the tensile strength of the porous body is equal to or higher than the aforementioned lower limits, the porous body can exhibit sufficient durability strength over a long period of time.

<Pressure loss>

The pressure loss of the presently disclosed porous body is preferably 0 kPa or more, more preferably 4 kPa or more, and even more preferably 6 kPa or more, and is preferably 10 kPa or less, more preferably 9.9 kPa or less, and even more preferably 9.8 kPa or less. When the pressure loss of the porous body is within the aforementioned ranges, clogging of the porous body can be suppressed.

The term "pressure loss" as used herein refers to a pressure loss in the porous body after a ceria aqueous dispersion was passed through the porous body for 10 minutes at a flow rate of 1 L/minute, the ceria aqueous solution containing ceria with an average secondary particle diameter of 20 nm dispersed at a concentration of 3 mass%.

<Fine particle collection rate>

The presently disclosed porous body preferably has a fine particle collection rate of 90% or more, more preferably 95% or more, and even more preferably 98% or more. When the fine particle collection rate is equal to or higher than the aforementioned lower limits, fine particles can be efficiently collected by using the presently disclosed porous body.

The term "fine particle" as used herein generally refers to a particle having a diameter of about the pore diameter of the porous body.

The "fine particle collection rate" can be measured by the methods described in Examples disclosed herein.

<Amount of metal ions in chemical liquid>

When the presently disclosed porous body is used as a filter, the amount of metal ions in a chemical liquid after the chemical liquid was passed through the filter is preferably 1 ppb or less, and more preferably 0.95 ppb or less.

The "amount of metal ions in the chemical liquid" can be measured by the method described in Examples disclosed herein.

<Metal ion collection rate>

The presently disclosed porous body preferably has a metal ion collection rate of 80% or more, more preferably 85% or more, and even more preferably 90% or more. When the metal ion collection rate is equal to or higher than the aforementioned lower limits, the metal ions can be efficiently collected by using the presently disclosed porous body.

The term "metal ion" as used herein generally refers to a metal ion having a diameter smaller than the pore diameter of the porous body.

"Metal ion collection rate" can be measured by the method described in Examples disclosed herein.

The method for producing the presently disclosed porous body is not particularly limited as long as the method uses a material having a zeta potential of -160 mV or more and -60 mV or less at pH 9, allows the resulting porous body to have a pore diameter of 1 nm or more and 1000 nm or less as measured by the bubble point method, and ensures the tensile strength to be 30 N/25 mm or more. However, from a viewpoint of efficiently producing the porous body having the aforementioned properties, the following method for producing the presently disclosed porous body may preferably be used.

(Method for producing porous body)

The presently disclosed method for producing a porous body is a method for producing the presently disclosed porous body described above. More specifically, the presently disclosed production method is a method for producing a porous body which is made of a material having a zeta potential of -160 mV or more and -60 mV or less at pH 9, has a pore diameter of 1 nm or more and 1000 nm or less as measured by a bubble point method and a tensile strength of 30 N/25mm or more. The presently disclosed production method includes a process of stretching an unstretched film containing at least a crystalline alicyclic structure-containing resin to form the aforementioned porous body (hereinafter, referred to as "stretching process").

<Stretching process>

In the stretching process, for example, the porous body can be formed by any of Methods (1) and (2) below.

(1) Method including a process of heating an unstretched film containing a crystalline alicyclic structure-containing resin and thereafter stretching the unstretched film at a low temperature (hereinafter referred to as "first stretching process"), and following the first stretching process, a process of stretching the stretched film obtained in the first stretching process at a high temperature (hereinafter referred to as "second stretching step"), to thereby form a porous body.

(2) Method for forming the porous body by removing a plasticizer from an unstretched film containing a crystalline alicyclic structure-containing resin and a plasticizer, and then stretching the unstretched film.

Methods (1) and (2) will be described in detail below.

[Method (1)]

As the crystalline alicyclic structure-containing resin used in Method (1), the crystalline alicyclic structure-containing resin described in the section of "(Porous body)" described above can be used.

The method of forming an unstretched film in Method (1) is not particularly limited, and an unstretched film can be formed by forming a crystalline alicyclic structure-containing resin into a film by a known method.

Further, in Method (1), the heating temperature and time for heating the unstretched film are not particularly limited, and for example, the heating temperature may be 200°C or higher and 300°C or lower. The heating time may be, for example, 1 minute or more and 60 minutes or less, and is preferably 30 minutes or less.

In Method (1), the method of stretching the unstretched film is not particularly limited. For example, a known stretcher may be used to stretch the unstretched film. The stretcher is not particularly limited, and for example, the stretching machines described in WO2016/067893A and WO2016/067920A may be used.

The "low temperature" in the first stretching process is a temperature lower than the stretching temperature in the second stretching process. The "high temperature" in the second stretching process is not particularly limited as long as it is higher than the stretching temperature in the first stretching process, and the stretching temperature in the first stretching process is preferably 100°C or higher and lower than 200°C. When the stretching temperature in the first stretching process is within the aforementioned range, the porous body to be obtained can be further improved in durability strength. The stretching temperature in the second stretching process is preferably 200°C or higher and lower than 300°C. When the stretching temperature in the second stretching step is within the aforementioned range, an appropriate number of pores can be formed in the porous body.

[Method (2)]

As the crystalline alicyclic structure-containing resin used in Method (2), the same crystalline alicyclic structure-containing resin used in Method (1) can be used. The plasticizer is not particularly limited, and examples thereof include: hydrocarbons such as liquid paraffin; phthalates such as dioctyl phthalate, diisononyl phthalate, diisodecyl phthalate, and dibutyl phthalate; and adipates such as dioctyl adipate and diisononyl adipate.

The method of forming the unstretched film in Method (2) is not particularly limited, and the unstretched film can be formed by kneading a crystalline alicyclic structure-containing resin and a plasticizer by a known method, and then forming the obtained kneaded product into a film by a known method.

Further, in Method (2), the proportion of the plasticizer contained in the unstretched film is not particularly limited, yet the content ratio of the plasticizer is preferably 30% by mass or more and 60% by mass or less with the mass of the entire unstretched film being 100 mass%. When the content ratio of the plasticizer is within the aforementioned range, an appropriate number of pores can be formed in the porous body.

Further, the method of removing the plasticizer from the unstretched film in Method (2) is not particularly limited, and examples thereof include a method of dissolving and removing a plasticizer from an unstretched film using a solvent or the like.

The method and the stretching apparatus for stretching the unstretched film after removing the plasticizer in Method (2) are not particularly limited, and the same stretching method and stretching apparatus as in Method (1) can be used.

Further, the stretching temperature in Method (2) is not particularly limited, and may be, for example, 100°C or more and 200°C or less.

In Method (1) or (2), the stretching ratio in stretching the unstretched film may be appropriately set, yet it is preferably 1.2 times or more, more preferably 1.3 times or more, and is preferably 100 times or less, more preferably 50 times or less, even more preferably 10 times or less, and particularly preferably 5 times or less. When the stretching ratio is within the aforementioned ranges, the presently disclosed porous body can be more efficiently produced.

Further, in Method (1), the stretching ratio in the second stretching process is preferably higher than the stretching ratio in the first process.

In the present specification, the stretching ratio refers to the stretching ratio of one time when the stretching is performed once, and refers to the total stretching ratio expressed by the product of the stretching ratios of multiple times when the stretching is performed multiple times.

According to Method (1) or (2) above, it is possible to achieve both high collection rate and low pressure loss at a high level, enabling efficient production of a porous body capable of exhibiting sufficient durability strength over a long period of time.

From a viewpoint of reducing the amount of impurities to be contained in the obtained porous body, Method (1) is preferably used.

EXAMPLES

The following provides a more specific description of the present disclosure based on Examples. However, the present disclosure is not limited to the following examples. In the following description, "%" and "parts" used in expressing quantities are by mass, unless otherwise specified. Moreover, in the case of a polymer that is produced through copolymerization of a plurality of types of monomers, the proportion constituted by a monomer unit in the polymer that is formed through polymerization of a given monomer is usually the same as the ratio (charging ratio) of the given monomer among all monomers used in polymerization of the polymer, unless otherwise specified.

The following methods were used to perform measurements of various physical properties in Examples and Comparative Examples.

<Weight-average molecular weight, number-average molecular weight, and molecular weight distribution>

A solution containing the measurement object was collected as a test sample. The obtained test sample was subjected to a gel permeation chromatography (GPC) (HLC-8320, produced by System Tosoh Co., Ltd.) using an H-type column (produced by Tosoh Co., Ltd.) and using tetrahydrofuran as a solvent at a temperature of 40°C, to determine the weight-average molecular weight (Mw) and the number-average molecular weight (Mn) as polystyrene-converted values, based on which the molecular weight distribution (Mw/Mn) was calculated.

<Percent hydrogenation (hydrogenation rate)>

Alicyclic structure-containing resins (A) and (B) were used as test samples.

The percent hydrogenation of the alicyclic structure-containing resin (A) was measured by $^1$H-NMR at 145°C, using orthodichlorobenzene-d[4] as a solvent.

The percent hydrogenation of the alicyclic structure-containing resin (B) was calculated by measuring $^1$H-NMR at 23°C, using deuterated chloroform as a solvent.

<Proportion of racemo diads>

The alicyclic structure-containing resin (A) was used as a test sample. The test sample was subjected to $^{13}$C-NMR measurement by applying an inverse-gated decoupling method at 200°C, using orthodichlorobenzene-d4/1,2,4-trichlorobenzene (TCB)-d3 (1/2 of mixed ratio (mass-based)) as a solvent, to thereby determine the proportion of racemo diads (meso/racemo ratio). Specifically, the proportion of racemo diads was determined from an intensity ratio of a signal at 43.35 ppm attributed to meso diads and a signal at 43.43 ppm attributed to racemo diads, with a peak at 127.5 ppm for orthodichlorobenzene-d4 taken as a standard shift.

<Glass transition temperature and melting point>

The alicyclic structure-containing resins (A) and (B) were used as test samples. The test samples were each heated to 320°C in a nitrogen atmosphere, and then rapidly cooled to room temperature at a cooling rate of -10°C/minute using liquid nitrogen. The test samples each were subjected to differential scanning calorimetry (DSC) according to JIS K7121, in which the temperature was raised at 10°C/minute using differential scanning calorimeters, to thereby determine the glass transition temperature and melting point of each of the alicyclic structure-containing resins.

<Zeta potential at pH 9>

Respective materials used in Examples and Comparative Examples were subjected to injection molding to obtain molded plates. The molded plates thus obtained were used as test samples. Then, the zeta potential of each of the test samples was measured. The measurement was performed using SurPASS3 (produced by AntonPaar). The measurement solution was prepared as 10 mM phosphate buffer with pH adjusted to 9. The zeta potential thus obtained was determined as the zeta potential at pH 9.

<Pore diameter as measured by bubble point method>

The porous bodies of Examples and Comparative Examples were used as test samples. The test samples were each immersed in isopropyl alcohol as a measuring liquid and the gas pressure was increased until bubbles are generated from the pores having the maximum pore diameter. Based on the pressure (bubble point pressure) when such bubbles were first generated, the maximum pore diameter $D_{BP}$ ($\mu$m) was calculated using the equation below. Then, the maximum pore diameter $D_{BP}$ ($\mu$m) thus obtained was determined as the pore diameter as measured by the bubble point method.

$$\text{Maximum pore diameter } D_{BP} = (4\gamma\cos\theta/P)\times10^{-6}$$

In the equation above, y represents the surface tension (N/m) of the measuring liquid, $\theta$ represents the contact angle (rad) between the measuring liquid and the test sample, and P represents the bubble point pressure (Pa). The maximum pore diameter was measured with a nano-pore size distribution measuring system (Perm-Porometer, produced by PMI).

<Tensile strength>

The porous bodies of Examples and Comparative Examples were each cut into a size of 25 mm × 150 mm and used as test samples. Using an autograph (AGS-10 kNX, produced by Shimadzu Corporation), the tensile strength of each test sample was measured according to JIS K7127. For the measurement, the chuck-to-chuck distance was adjusted to 100 mm and the tensile speed was 300 mm/min.

<Crystallinity>

Melting points of the materials used in Examples and Comparative Examples were detected by differential scanning calorimetry (DSC) according to JIS K7121. When the melting point of a material was detected, the crystallinity of the material was evaluated as "crystalline", and when the melting point was not detected, the crystallinity of the material was evaluated as "non-crystalline".

<Fine particle collection rate>

The porous bodies of Examples and Comparative Examples were each cut into a size of 400 cm × 20 cm and used as test samples. The test samples were each folded longitudinally 40 times in 10 cm lengths and placed in a cartridge, so as to be used as a filter sample.
A ceria aqueous dispersion at a concentration of 3% was passed through the filter sample for 10 minutes at a flow rate of 1 L/minute. Thereafter, the ceria concentration in the ceria aqueous dispersion was measured by a particle measuring system (Ultra DI20, produced by Spectris Co., Ltd.), and the fine particle collection rate was calculated by the equation below. As the ceria in the ceria aqueous dispersion, ceria having an average particle diameter of 20 nm for the secondary particles was used.

$$X_P = (A_P - A_P)/A_P0 \times 100$$

In the equation above, Xr (%) represents the fine particle collection rate, $A_P0$ (number) represents the number of ceria in the ceria aqueous dispersion at a concentration of 3%, and $A_P$ (number) represents the number of ceria in the ceria aqueous dispersion after passing through the filter for 10 minutes.

<Pressure loss>

The pressure loss was calculated by measuring the differential pressure after a ceria aqueous dispersion at a concentration of 3% was passed through the filter sample for 10 minutes at a flow rate of 1 L/minute.

<Tear in 30 minutes>

A ceria aqueous dispersion at a concentration of 3% was passed through the filter sample for 30 minutes at a flow rate of 1 L/minute, and thereafter the filter sample was visually observed. Then, in a case where the filter sample was torn, the tear in 30 minutes was evaluated as "observed", and in a case the filter sample was not torn, the tear in 30 minutes was evaluated as "unobserved".
The filter sample and the ceria aqueous dispersion liquid were the same as the filter sample and the ceria aqueous dispersion liquid used in <Fine particle collection rate> above.

<Amount of metal ions in chemical liquid>

The amount of metal ions in the chemical liquid after the chemical liquid was passed through the filter sample was measured, using inductively coupled plasma-mass spectrometry (ICP-MS).
The filter sample was the same as the filter sample used in <Fine particle collection rate> above. The chemical liquid was prepared by adding Conostan oil analysis standard S-21 (produced by SCP Science) to 2-acetoxy-1-methoxypropane (produced by KANTO CHEMICAL CO., INC., Primepure Grade) so that the levels of the respective metal ions were 10 ppb.

<Metal ion collection rate>

The chemical liquid was passed through the filter sample, and the amount of metal ions in the chemical liquid was measured by inductively coupled plasma-mass spectrometry (ICP-MS). Then, the metal ion collection rate was calculated by the equation below.

Metal ion collection rate (%) = 100 - metal ion amount in chemical liquid [ppb]/metal ion amount [ppb] in initial chemical liquid $\times$ 100

In the equation above, the amount of metal ion in the initial chemical liquid is 10 ppb. Further, the filter sample was the same as the filter sample used in <Fine particle collection rate> above. The chemical liquid was the same as the chemical liquid used in <Amount of metal ions in the chemical liquid> above.

(Production Example 1)

<Production of alicyclic structure-containing resin (A)>

A metallic pressure-resistant reaction vessel, inside of which was replaced with nitrogen, was charged with 154.5 parts of cyclohexane as an organic solvent, 42.8 parts (30 parts as dicyclopentadiene) of a cyclohexane solution (concentration: 70%) of dicyclopentadiene (endo-isomer content: 99% or more) as an alicyclic structure-containing monomer, and 1.9 parts of 1-hexene as a molecular weight regulator, and the whole volume was heated to 53°C. Meanwhile, a ring-opening polymerization catalyst solution was prepared by adding 0.061 parts of an n-hexane solution (concentration: 19%) of diethylaluminum ethoxide, which is an organometallic reducing agent as a ring-opening polymerization catalyst, to a solution obtained through dissolution of 0.014 parts of a tetrachlorotungsten phenylimide (tetrahydrofuran) complex, which is a metal compound as a ring-opening polymerization catalyst, in 0.70 parts of toluene (organic solvent), and then the resultant was stirred for 10 minutes. This ring-opening polymerization catalyst solution was added into the reactor and a ring-opening polymerization reaction was carried out for 4 hours at 53°C to obtain a solution containing a dicyclopentadiene ring-opened polymer.

To 200 parts of the obtained solution containing the dicyclopentadiene ring-opened polymer, 0.037 parts of 1,2-ethanediol was added as a terminator, and the mixture was stirred at 60°C for 1 hour to stop the polymerization reaction. Then, 1 part of a hydrotalcite-like compound as an adsorbent (product name: "KYOWAAD® 2000", produced by Kyowa Chemical Industry Co., Ltd. (KYOWAAD is a registered trademark in Japan, other countries, or both)) was added, and the solution was heated to 60°C, and stirred for 1 hour. Then, 0.4 parts of a filter aid (product name "Radiolite® #1500", produced by Showa Chemical Industry Co., Ltd. (Radiolite is a registered trademark in Japan, other countries, or both)) was added, and the adsorbent was filtered off using a PP pleated cartridge filter (product name "TCP-HX", produced by ADVANTEC TOYO KAISHA, LTD.) to obtain a solution containing dicyclopentadiene ring-opened polymer.

A part of the solution was measured for the molecular weight of the dicyclopentadiene ring-opened polymer, with the result that the weight-average molecular weight (Mw) was 28,100, the number-average molecular weight (Mn) was 8,750, and the molecular weight distribution (Mw/Mn) was 3.21.

To 200 parts (polymer content: 30 parts) of a solution containing the obtained dicyclopentadiene ring-opened polymer, 100 parts of cyclohexane as an organic solvent and 0.0043 parts of chlorohydridocarbonyltris(triphenylphosphine)ruthenium as a homogeneous catalyst were added, and hydrogenation was carried out under 6 MPa hydrogen pressure at 180°C for 4 hours. The reaction liquid was a slurry in which a solid content was precipitated.

The reaction liquid was centrifuged to separate the solid content from the solution, and the solid content was dried under reduced pressure at 60°C for 24 hours to obtain 28.5 parts of a dicyclopentadiene ring-opened polymer hydride as the alicyclic structure-containing resin (A).

The obtained alicyclic structure-containing resin (A) had a percent hydrogenation of 99% or more, a glass transition temperature of 98°C, a ratio of racemo diads (meso/racemo ratio) of 89%, and a melting point of 262°C, and thus had crystallinity. In addition, the alicyclic structure-containing resin (A) had a zeta-potential of -65 mV at pH 9.

(Production Example 2)

<Production of alicyclic structure-containing resin (B)>

A catalyst liquid was prepared by dissolving 51 parts of benzylidene(1,3-dimesitylimidazolidine-2-ylidene)(tricyclohexylphosphine)ruthenium dichloride and 79 parts of triphenylphosphine in 952 parts of toluene.

A monomer liquid including 70 parts of tetracyclo[6.2.1.1$^{3,6}$.0$^{2,7}$]dodeca-4-ene and 30 parts of 2-norbornene as alicyclic structure-containing monomers, and 0.3 parts of 1-hexene as a chain transfer agent were dissolved in 3000 parts of cyclohexane as an organic solvent under a nitrogen flow. To this mixture, 6 parts of the above catalyst liquid was added under stirring, and the resultant mixture was polymerized for 2 hours while being kept at 100°C. The polymerized solution was returned to room temperature and poured into 12000 parts of 2-propanol to coagulate the polymer. The coagulated polymer was repeatedly subjected to washing with 2-propanol and filtration to remove the solvent.

Then, 30 parts of the polymer obtained above was dissolved in 70 parts of cyclohexane as an organic solvent, and 1 part of an alumina-supported nickel catalyst (containing 0.35 parts of nickel oxide and 0.2 parts of nickel oxide in 1 part of the catalyst, having the pore volume of 0.8 cm$^3$/g and the specific surface area of 300 m$^2$/g) and 2 parts of isopropyl alcohol were added thereto. The resultant was reacted in an autoclave at 230°C under 50 kgf/cm$^2$ hydrogen pressure for 5 hours. After the reaction was completed, the nickel catalyst was removed by microfiltration so that the content was reduced to 1 ppm or less. Then, the reaction solution was poured into 500 parts of isopropyl alcohol under stirring to coagulate the cycloolefin polymer. The coagulated polymer was repeatedly subjected to washing with isopropyl alcohol and filtration, and then the solvent was removed so that the content was reduced to 1 ppm, to thereby obtain the alicyclic structure-containing resin (B).

The obtained alicyclic structure-containing resin (B) had a percent hydrogenation of almost 100%, a glass transition temperature (Tg) of 120°C, a weight-average molecular weight (Mw) of 40000, a number-average molecular weight (Mn) of 29000, and a molecular weight distribution (Mw/Mn) of 1.38. The melting point was not detected, and thus it was amorphous. The obtained alicyclic structure-containing resin (B) had a zeta-potential of -65 mV at pH 9.

(Example 1)

<Production of Porous Body (A)>

A crystalline alicyclic structure-containing resin was used as the material. As the crystalline alicyclic structure-containing resin, the alicyclic structure-containing resin (A) obtained in Production Example 1 was used.

A hot melt extrusion film molding machine equipped with a T-die (Measuring Extruder Type Me-20/2800 V3, produced by Optical Control Systems GmbH) was used to mold the above-mentioned material into a film having a thickness of 100 μm and a width of 120 mm, and the obtained unstretched film was wound into a roll at a rate of 2 m/minute. The operating conditions of the film shaping machine are provided in below.

- Barrel temperature setting: 280-290°C
- Die temperature: 270 °C
- Screw speed: 30 rpm

The obtained unstretched film was cut into 90 mm × 90 mm squares to obtain a sheet, and then the sheet was heated at 220°C for 10 minutes with the four sides of the sheet being fixed.

The heated sheet was installed in a compact stretching machine (EX10-B type, produced by Toyo Seiki Seisaku-sho, Ltd.) and subjected to a stretching treatment at a stretching temperature of 110°C, with a stretching ratio of 1.3 times and a stretching speed of 300 mm/minute, to thereby obtain a stretched sheet (first stretching process).

Then, the obtained stretched sheet was subjected to a stretching treatment at a stretching temperature of 220°C, with a stretching ratio of 9 times and a stretching speed of 300 mm/minute (second stretching process), to thereby obtain Porous Body (A).

Porous Body (A) thus obtained was subjected to various measurements. The results are provided in Table 1.

(Example 2)

<Production of Porous Body (B)>

A crystalline alicyclic structure-containing resin was used as the material. As the crystalline alicyclic structure-containing resin, the alicyclic structure-containing resin (A) obtained in Production Example 1 was used.

A twin screw extruder (TEM-37BS, produced by Toshiba Machine Co., Ltd.) was used to knead the aforementioned material at a resin temperature of 280°C, with a liquid paraffin as a plasticizer being fed from a side feeder. The liquid paraffin was fed in an amount of 50% of the total amount of the kneaded material.

The kneaded material was molded into a film having a thickness of 100 $\mu$m and a width 120 mm by using the hot melt extrusion film molding machine equipped with the T-die used in Example 1, and the obtained unstretched film was wound into a roll at a rate of 2 m/minute.

The obtained unstretched film was cut into 90 mm × 90 mm squares to obtain a sheet, and the sheet was immersed in a 1,1,1-trichloroethane solution as a solvent for 3 minutes to dissolve and remove the liquid paraffin.

Thereafter, the sheet from which the liquid paraffin had been removed was installed in a compact stretching machine (EX10-B Type, produced by Toyo Seiki Seisaku-Sho, Ltd.), and the sheet was subjected to a stretching treatment at a stretching temperature of 110°C with a stretching ratio of 2 times and a stretching speed of 300 mm/minute. Next, the sheet was subjected to heat fixation by heating at 220°C for 10 minutes with the four sides of the sheet being fixed, to thereby obtain Porous Body (B).

Porous Body (B) thus obtained was subjected to various measurements in the same manner as in Example 1. The results are provided in Table 1.

(Example 3)

A porous membrane made of Nylon-66 with a thickness of 10 $\mu$m and a pore diameter of 450 nm as measured by the bubble point method was prepared as Porous Body (C). Nylon-66 as the material had a zeta potential of -62 mV at pH 9, and had crystallinity.

Porous Body (C) was subjected to various measurements in the same manner as in Example 1. The results are provided in Table 1.

(Example 4)

A porous membrane made of vinylidene fluoride resin (PVDF) with a thickness of 10 $\mu$m and a pore diameter of 450 nm as measured by the bubble point method, was prepared as Porous Body (D). The vinylidene fluoride resin as the material had a zeta potential of -63 mV at pH 9, and had crystallinity.

Porous Body (D) was subjected to various measurements in the same manner as in Example 1. The results are provided in Table 1.

(Example 5)

A porous membrane made of polysulfone as the material with a thickness of 10 $\mu$m and a pore diameter of 450 nm as measured by the bubble point method was prepared as Porous Body (E). The polysulfone as the material had a zeta potential of -60 mV at pH 9, and had crystallinity.

Porous Body (E) was subjected to various measurements in the same manner as in Example 1. The results are provided in Table 1.

(Example 6)

<Production of Porous Body (F)>

Porous Body (F) was obtained in the same manner as in Example 2, except that an amorphous alicyclic structure-containing resin was used as the material instead of the crystalline alicyclic structure-containing resin. As the amorphous alicyclic structure-containing resin, the alicyclic structure-containing resin (B) obtained in Production Example 2 was used.

Porous Body (F) was subjected to various measurements in the same manner as in Example 1. The results are provided in Table 1.

(Comparative Example 1)

<Production of Porous Body (G)>

A crystallin alicyclic structure-containing resin as the material was melted using an extruder (produced by Toshiba Machine Co., Ltd., trade name "TEM-35") heated to 300°C. The alicyclic structure-containing resin (A) obtained in Production Example 1 was used as the crystalline alicyclic structure-containing resin. A melt blow molding machine (produced by Shinwa Industrial Co.,Ltd. trade name "SWMB-T300") having a die with 1500 nozzle holes of 0.15 μm in diameter was used to mold a molten crystalline alicyclic structure-containing resin, to thereby obtain Porous Body (G). The conveyor speed of the molding machine at this time was set to 50 m/minute.

Porous Body (G) was subjected to various measurements in the same manner as in Example 1. The results are provided in Table 2.

(Comparative Example 2)

<Production of Porous Body (H)>

Porous Body (H) was obtained in the same manner as in Example 2, except that no stretching treatment was performed on the sheet from which the liquid paraffin had been removed in producing the porous body.

Porous Body (H) was subjected to various measurements in the same manner as in Example 1. The results are provided in Table 2.

(Comparative Example 3)

<Production of Porous Body (I)>

A resin composition containing an amorphous alicyclic structure-containing resin and a high-density polyethylene (HF560, produced by Japan Polyethylene Corporation) was used as the material. The alicyclic structure-containing resin (B) obtained in Production Example 2 was used as the amorphous alicyclic structure-containing resin.

Specifically, the amorphous alicyclic structure-containing resin and the aforementioned high-density polyethylene were kneaded at a resin temperature of 280°C using a twin-screw extruder (TEM-37BS, produced by Toshiba Machine Co., Ltd.) to obtain a resin composition. At this time, the weight ratio of the amorphous alicyclic structure-containing resin to the high-density polyethylene (amorphous alicyclic structure-containing resin/high-density polyethylene) in the resin composition was 60/40. The resin composition as the material had a zeta potential of -50 mV at pH 9, and had no crystallinity.

Then, Porous Body (I) was obtained in the same manner as in Example 2, except that the above resin composition was used in place of the alicyclic structure-containing resin (A), and the stretching treatment was not performed on the sheet from which the liquid paraffin had been removed.

Porous Body (I) was subjected to various measurements in the same manner as in Example 1. The results are provided in Table 2.

(Comparative Example 4)

<Production of Porous Body (J)>

A single filament made of a cyclic olefin-based copolymer was produced under the conditions described in Example 1 of WO2018/230386A. As the single filament, a fiber with a fineness of 3 dtex and a fiber length of 10 mm were used.

A nonwoven fabric was produced by an air-laid forming machine (produced by CAMPEN Machinery A/S) using the above single filament as the material. At this time, the crimping process was performed without performing heating and stretching, to thereby obtain a non-woven fabric. The single filament had a zeta potential of -55 mV at pH 9, and had no crystallinity.

The nonwoven fabric obtained as described above was used as Porous Body (J).

Porous Body (J) was subjected to various measurements in the same manner as in Example 1. The results are provided in Table 2.

Table 1

| | | | Example 1 | Example 2 | Example 3 | Example 4 | Example 5 | Example 6 |
|---|---|---|---|---|---|---|---|---|
| Porous Body | | Name | Porous Body (A) | Porous Body (B) | Porous Body (C) | Porous Body (D) | Porous Body (E) | Porous Body (F) |
| | | Material | Crystalline COP | Crystalline COP | Nylon-66 | PVDF | Polysulfone | Amorphous COP |
| | | Zeta potential at pH 9 [mV] | -65 | -65 | -62 | -63 | -60 | -65 |
| | | Pore diameter as measured by bubble point method [nm] | 800 | 200 | 450 | 450 | 450 | 200 |
| | | Tensile strength [N/ 25mm] | 35 | 40 | 35 | 32 | 30 | 32 |
| | | Crystallinity | crystalline | crystalline | crystalline | crystalline | non-crystalline | non-crystalline |
| | | Streching ratio [times] | 1.3 (First Stretch Process) 9 (Second Strech Process) | 2 | - | - | - | 2 |

(continued)

|  |  | Example 1 | Example 2 | Example 3 | Example 4 | Example 5 | Example 6 |
|---|---|---|---|---|---|---|---|
| Evaluation | Fine particle collection rate [%] | 98 | 98 | 92 | 91 | 90 | 96 |
|  | Pressure loss [kPa] | 7.3 | 8.5 | 9.5 | 9.8 | 9.9 | 9.8 |
|  | Tear in 30 minutes | unobserved | unobserved | unobserved | unobserved | unobserved | unobserved |
|  | Amount of metal ions in chemical liquid [ppb] | 0.8 | 0.9 | 0.9 | 0.9 | 0.9 | 0.8 |
|  | Metal ion collection rate [%] | 92 | 91 | 91 | 91 | 91 | 92 |

Table 2

|  |  | Comparative Example 1 | Comparative Example 2 | Comparative Example 3 | Comparative Example 4 |
|---|---|---|---|---|---|
| Porous body | Name | Porous Body (G) | Porous Body (H) | Porous Body (I) | Porous Body (J) |
|  | Material | Crystalline COP | Amorphous COP | Amorphous COP and high density PE | Cyclo olefin-based copolymer |
|  | Zeta potential at pH 9 [mV] | -65 | -65 | -50 | -55 |
|  | Pore diameter as measured by bubble point method [nm] | 2700 | 200 | 200 | 8900 |
|  | Tensile Strength [N/25mm] | 20 | 15 | 12 | 20 |
|  | Crystallinity | crystalline | non-crystalline | non-crystalline | non-crystalline |
|  | Stretching ratio [times] | - | - | - | — |
| Evaluation | Fine particle collection rate [%] | 84 | 96 | 83 | 65 |
|  | Pressure loss [kPa] | 3.5 | 9.8 | 12.5 | 2.3 |
|  | Tear in 30 minutes | unobserved | observed | observed | observed |
|  | Amount of metal ions in chemical liquid [ppb] | 0.9 | 0.6 | 2.5 | 7 |
|  | Metal ion collection rate [%] | 91 | 94 | 75 | 30 |

In Tables 1 and 2 above:

"Crystallin COP" refers to a crystalline alicyclic structure-containing resin;

"Amorphous COP" refers to an amorphous alicyclic structure-containing resin;

"PVDF" refers to polyvinylidene fluoride; and

"PE" refers to polyethylene.

With reference to Table 1, it can be seen that the porous bodies of Examples 1 to 6, each being made of a material having a zeta potential of -160 mV or more and -60 mV or less at pH 9, having a pore diameter of 1 nm or more and 1000 nm or less as measured by the bubble point method and a tensile strength of 30 N/25mm or more, are high in fine particle and metal ion collection rates, low in pressure loss, with no tear observed in 30 minutes.

On the other hand, with reference to Table 2, it can be seen that the porous body of Comparative Example 1, which was made of a material having a zeta potential of -160 mV or more and -60 mV or less at pH 9 but has a pore diameter larger than 1000 nm as measured by the bubble point method and a tensile strength of less than 30 N/25mm, is low in fine particle collection rate.

Further, with reference to Table 2, it can be seen that the porous bodies of Comparative Examples 2 and 3, each being made of a material having a zeta potential of -160 mV or more and -60 mV or less at pH 9 and a pore diameter of 1 nm or more and 1000 nm or less, still suffer tear in 30 minutes when a tensile strength is lower than 30 N/25mm. In addition, it can be seen that the porous body of Comparative Example 3 is still low in metal ion collection rate.

Further, with reference to Table 2, it can be seen that the porous body of Comparative Example 4, which is made of a material having a zeta potential of -60 mV at pH 9, and has a pore diameter of larger than 1000 nm as measured by the bubble point method and a tensile strength of less than 30 N/25mm, is still low in fine particle collection rate and metal ion collection rate and suffers tear in 30 minutes.

INDUSTRIAL APPLICABILITY

According to the present disclosure, it is possible to provide a porous body capable of achieving both high collection rate and low pressure loss, and capable of exhibiting sufficient durability strength over a long period of time, and a method for efficiently producing the porous body.

**Claims**

1. A porous body made of a material having a zeta potential of -160 mV or more and -60 mV or less at pH 9, the porous body having:

    a pore diameter of 1 nm or more and 1000 nm or less as measured by a bubble point method; and
    a tensile strength of 30 N/25 mm or more.

2. The porous body according to claim 1, wherein the porous body has a pressure loss of 0 kPa or more and 10 kPa or less after a ceria aqueous dispersion passed through the porous body for 10 minutes at a flow rate of 1 L/minute, the ceria aqueous dispersion containing ceria with an average secondary particle diameter of 20 nm dispersed at a concentration of 3 mass%.

3. The porous body according to claim 1 or 2, wherein the material is a crystalline alicyclic structure-containing resin.

4. A method for producing a porous body made of a material having a zeta potential of -160 mV or more and -60 mV or less at pH 9, the porous body having a pore diameter of 1 nm or more and 1000 nm or less as measured by a bubble point method and a tensile strength of at least 30 N/25 mm, the method comprising stretching an unstretched film at least containing a crystalline alicyclic structure-containing resin to form the porous body.

5. The method according to claim 4, wherein the stretching is performed at a stretching ratio of 1.2 times or more and 100 times or less.

## INTERNATIONAL SEARCH REPORT

| International application No. |
|---|
| **PCT/JP2022/044790** |

**A. CLASSIFICATION OF SUBJECT MATTER**

*C08J 9/00*(2006.01)i; *C08J 9/28*(2006.01)i; *B29C 67/20*(2006.01)i
FI: C08J9/00 A CEZ; C08J9/28 101; B29C67/20 B

According to International Patent Classification (IPC) or to both national classification and IPC

**B. FIELDS SEARCHED**

Minimum documentation searched (classification system followed by classification symbols)

C08J9/00-9/42; B29C44/00-44/60; B29C67/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-521808 A (ARKEMA INC) 28 August 2014 (2014-08-28) claims, table 1 | 1-2 |
| A | | 3-5 |
| X | JP 2008-222929 A (NIPPON ZEON CO LTD) 25 September 2008 (2008-09-25) claim 5, paragraphs [0001], [0091], [0103]-[0104], [0107], [0124] | 1-5 |
| A | WO 2019/167683 A1 (NIPPON ZEON CO LTD) 06 September 2019 (2019-09-06) entire text, all drawings | 1-5 |
| A | WO 2017/057109 A1 (NIPPON ZEON CO LTD) 06 April 2017 (2017-04-06) entire text, all drawings | 1-5 |
| A | WO 98/024540 A1 (FUJI PHOTO FILM CO LTD) 11 June 1998 (1998-06-11) entire text, all drawings | 1-5 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/044790**

| Patent document cited in search report | | | Publication date (day/month/year) | Patent family member(s) | | | Publication date (day/month/year) |
|---|---|---|---|---|---|---|---|
| JP | 2014-521808 | A | 28 August 2014 | US | 2014/0144833 | A1 | |
| | | | | claim, paragraph [0042] | | | |
| | | | | WO | 2013/022660 | A1 | |
| | | | | EP | 2739454 | A1 | |
| | | | | AU | 2012294783 | A | |
| | | | | CN | 103717377 | A | |
| JP | 2008-222929 | A | 25 September 2008 | (Family: none) | | | |
| WO | 2019/167683 | A1 | 06 September 2019 | US | 2020/0398201 | A1 | |
| | | | | entire text, all drawings | | | |
| | | | | EP | 3760777 | A1 | |
| | | | | CN | 111670278 | A | |
| | | | | KR | 10-2020-0125597 | A | |
| WO | 2017/057109 | A1 | 06 April 2017 | US | 2018/0179341 | A1 | |
| | | | | entire text, all drawings | | | |
| | | | | EP | 3357974 | A1 | |
| | | | | CN | 108026376 | A | |
| | | | | KR | 10-2018-0059762 | A | |
| WO | 98/024540 | A1 | 11 June 1998 | US | 6126825 | A | |
| | | | | entire text, all drawings | | | |
| | | | | EP | 922486 | A1 | |
| | | | | KR | 10-1999-0082169 | A | |

Form PCT/ISA/210 (patent family annex) (January 2015)

**EP 4 458 891 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019167683 A
- WO 2010110323 A
- JP 2015054885 A
- WO 2016067893 A
- WO 2016067920 A
- WO 2018230386 A